# EUROPEAN PATENT APPLICATION

(11) **EP 3 756 962 A1**
(43) Date of publication of application: **30.12.2020**
(21) Application number: 19182582.7
(22) Date of filing: 26.06.2019
(51) Int. Cl.: B60W 10/04, B60W 10/18, B60W 10/20, B60W 30/09, B60W 30/095

(54) **METHOD AND SYSTEM FOR DETERMINING AT LEAST ONE DRIVING MAOEUVER IN RELATION TO A POTENTIAL COLLISION**

(71) Applicant: Zenuity AB, 417 56 Göteborg (SE)
(72) Inventor: DAHL, John, 422 44 Hisings Backa (SE)
(74) Representative: Zacco Sweden AB

(57) **Abstract**

A method, a non-transitory computer-readable storage medium, and a collision avoidance system for determining at least one driving manoeuver in relation to a potential collision are disclosed. Sensor data are received from a sensor system of a first vehicle. Based on the received sensor data, a risk of a primary collision of a second vehicle into the first vehicle is determined. Based on the received sensor data and the determined risk of the primary collision, a risk of a secondary collision between the first vehicle and a further object is determined, the secondary collision resulting from the primary collision. Based on the risk of the primary collision and the risk of the secondary collision, at least one driving manoeuver in relation to the first vehicle for collision avoidance or mitigation is determined.

## Description

### TECHNICAL FIELD

The present invention relates to a method and a vehicle control system for post-crash automated collision avoidance.

### BACKGROUND

Today, many vehicles have a variety of driver support functions in the form of advanced driver assistance systems (ADAS) features. Also, many of these features form a basis for current and future autonomous drive (AD) features. Examples of ADAS features include lane departure warning systems, lane centring, lane keeping aid, pilot assist, lane change assistance, parking sensors, pedestrian protection systems, blind spot monitors, adaptive cruise control (ACC), antilock braking systems, and so forth. These features supplement the traditional driver control of the vehicle with one or more warnings or automated actions in response to certain scenarios.

In particular, vehicles with ADAS or AD systems or features, can be provided with collision avoidance systems, which include features for avoiding collisions or mitigating the effects of collisions. In presently known methods and systems for collision avoidance, sensor data from sensor systems that can perceive other vehicles and objects in the surrounding environment are used to determine estimated predictions of trajectories of the other vehicles and objects. From the determined estimated predictions, driving manoeuvers are determined to avoid or mitigate the effects of collisions. However, problems remain with the presently known methods and systems. For example, existing methods and systems are generally focused on avoiding a collision or mitigating the effects of the collision which may not result in the best driving manoeuvers being determined to avoid or mitigate collisions.

Therefore, there is a need for a method and system that enable determining better driving manoeuvers to avoid or mitigate collisions than presently known systems and methods.

### SUMMARY

An object of the present disclosure is to provide a method, collision avoidance system and a non-transitory computer-readable storage medium, which seek to mitigate, alleviate, or eliminate one or more of the above-identified deficiencies in the art and drawbacks of presently known systems and methods.

This object is achieved by a method, collision avoidance system and a non-transitory computer-readable storage medium as defined in the appended claims. The term exemplary is in the present context to be understood as an instance, example or illustration.

According to a first aspect of the present disclosure, there is provided a method for a collision avoidance system for determining at least one driving manoeuver in relation to a potential collision. In the method sensor data are received from a sensor system of a first vehicle. Based on the received sensor data, a risk of a primary collision of a second vehicle into the first vehicle is determined. Furthermore, based on the received sensor data and the determined risk of the primary collision, a risk of a secondary collision between the first vehicle and a further object is determined. The secondary collision is a collision resulting from the primary collision. Based on the risk of the primary collision and the risk of the secondary collision, at least one driving manoeuver in relation to the first vehicle for collision avoidance or mitigation is determined.

By means of the proposed method at least one driving manoeuver can be determined that results in a better overall collision avoidance or mitigation compared to presently known systems and methods. In particular, the method identifies a risk of a secondary collision resulting from the primary collision. Also the risk of the secondary collision is taken into account when determining one or more driving manoeuvers to avoid or mitigate the effects of the primary collision and secondary collision. Taking both the primary collision and a resulting secondary collision into account will enable determining better driving manoeuvers to avoid or mitigate the overall effects of collisions.

The present disclosure is at least partly based on the realization that it would be advantageous to not only avoid or mitigate the direct effects of a potential primary collision of a second vehicle into the first vehicle, but to also predict potential secondary effects of the primary collision. Such effects may be effects of a potential secondary collision between the first vehicle and a further object, wherein the secondary collision is a result of the primary collision. Thus, the inventor has realized that, in addition to the primary collision, it is advantageous to take also the secondary collision, resulting from the primary collision, into account in order to determine suitable driving manoeuvers. This enables identifying one or more driving manoeuvers that avoid or mitigate the overall effects of the primary collision and the secondary collision.

A collision avoidance system in the present context is a system that aims at avoiding collision or mitigating the effects of a collision. Hence, the collision need not necessarily be avoided.

A vehicle in the present context may be any type of road vehicle, such as e.g. a car, a bus, a truck, etc.

An exemplary embodiment of the present disclosure further comprises identifying, based on the received sensor data, a conflict-free space for the first vehicle in relation to the further object. The determined at least one driving manoeuver is further based on the identified conflict-free space.

A conflict-free space is typically a space where two objects are predicted not to be at the same time. Hence, a conflict-free space for the first vehicle in relation to the further object may be a space where the further object is not predicted to be in at a time when the first vehicle can enter the space.

By identifying a conflict-free space and basing the at least one driving manoeuver on the identified conflict-free space, the effects of the secondary collision can be avoided or mitigated.

The identification of the conflict-free space for the first vehicle in relation to the further object is preferably further based on the risk of the primary collision and the risk of the secondary collision.

According to a further exemplary embodiment of the present disclosure, the determined at least one driving manoeuver is aimed at the first vehicle moving to the conflict free space.

By aiming the at least one driving manoeuver at moving the first vehicle to the conflict-free space, the effects of the secondary collision can be avoided or mitigated. The first vehicle can be moved to the conflict-free space e.g. by means of the at least one driving manoeuver or as a result of the primary collision in combination with the at least one driving manoeuver.

In further exemplary embodiments of the present disclosure, the determined at least one driving manoeuver is aimed at the first vehicle moving to the conflict-free space before the primary collision occurs.

According to a further exemplary embodiment of the present disclosure, the determined at least one driving manoeuver is aimed at the first vehicle moving to the conflict-free space as a result of the primary collision occurring.

An exemplary embodiment of the present disclosure, further comprises estimating, based on the received sensor data, one or more of:
- a weight of the first vehicle
- a size of the first vehicle
- a position of the first vehicle at the primary collision
- a velocity of the first vehicle at the primary collision
- an acceleration of the first vehicle at the primary collision
- a direction of the first vehicle at the primary collision
- a front wheel direction for the first vehicle at the primary collision
- a rate of change of a front wheel angle for the first vehicle at the primary collision
- a velocity of the first vehicle after the primary collision
- a direction of the first vehicle after the primary collision
- a weight of the second vehicle
- a size of the second vehicle
- a velocity of the second vehicle at the primary collision
- an acceleration of the second vehicle at the primary collision
- a direction of the second vehicle at the primary collision
- a point of collision of the second vehicle on the first vehicle at the primary collision
- a weight of the further object
- a size of the further object
- a position of the further object at the primary collision
- a velocity of the further object after the primary collision
- an acceleration of the further object at the primary collision
- a velocity of the further object after the primary collision
- a direction of the further object after the primary collision

In further exemplary embodiments of the present disclosure, the further object is one of a pedestrian, a cyclist, a motorcyclist, a third vehicle, an animal, and a fixed object.

In further exemplary embodiments of the present disclosure, the determined at least one driving manoeuver is to be performed before the primary collision occurs.

According to a further exemplary embodiment of the present disclosure, the primary collision is of the second vehicle into the first vehicle from behind.

An exemplary embodiment of the present disclosure, further comprises generating a control signal comprising instructions to perform the determined at least one driving manoeuver.

An exemplary embodiment of the present disclosure, further comprises actuating a control system of the first vehicle to perform the determined at least one driving manoeuver.

An exemplary embodiment of the present disclosure, further comprises actuating a user interface of the first vehicle for providing instructions to a driver of the first vehicle to perform the determined at least one driving manoeuver.

In further exemplary embodiments of the present disclosure, the at least one driving manoeuver comprises one or more of an acceleration manoeuvre, a steering manoeuvre, and a braking manoeuvre.

According to a second aspect of the present disclosure, there is provided a non-transitory computer-readable storage medium storing one or more programs configured to be executed by one or more processors of a central control system, the one or more programs comprising instructions for performing the method according to any one of the embodiments disclosed herein. With this aspect of the disclosure, similar advantages and preferred features are present as in the previously discussed first aspect of the disclosure.

Embodiments of the non-transitory computer-readable storage medium according to the second aspect may for example include features corresponding to the features of any of the embodiments of the method according to the first aspect.

According to a third aspect of the present disclosure, there is provided a collision avoidance system comprising at least one processor and at least one memory. The at least one processor is configured to execute instructions stored in the memory causing the collision avoidance system to perform a method comprising receiving sensor data from a sensor system of a first vehicle, determining, based on the received sensor data, a risk of a primary collision of a second vehicle into the first vehicle, determining, based on the received sensor data and the determined risk of the primary collision, a risk of a secondary collision between the first vehicle and a further object, the secondary collision resulting from the primary collision, and determining, based on the risk of the primary collision and the risk of the secondary collision, at least one driving manoeuver in relation to the first vehicle for collision avoidance or mitigation.

Embodiments of the collision avoidance system according to the third aspect may for example include features corresponding to the features of any of the embodiments of the method according to the first aspect.

Further embodiments of the invention are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the present invention will in the following be further clarified with reference to the embodiments described hereinafter.

### BRIEF DESCRIPTION OF THE DRAWINGS

Further objects, features and advantages of embodiments of the disclosure will appear from the following detailed description, reference being made to the accompanying drawings, in which:
Figures 1a and 1b show schematic perspective view illustrations of two scenarios in relation to embodiments of the present disclosure.
Figure 2 is a schematic side view illustration of a vehicle comprising a collision avoidance system in accordance with an embodiment of the present disclosure.
Figure 3 is a flow-chart representation of a method for determining at least one driving manoeuver in relation to a potential collision in accordance with an embodiment of the present disclosure.
Figure 4 is a schematic diagram of a collision avoidance system in accordance with an embodiment of the present disclosure.

### DETAILED DESCRIPTION

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

In the following description of exemplary embodiments, the same reference numerals denote the same or similar components.

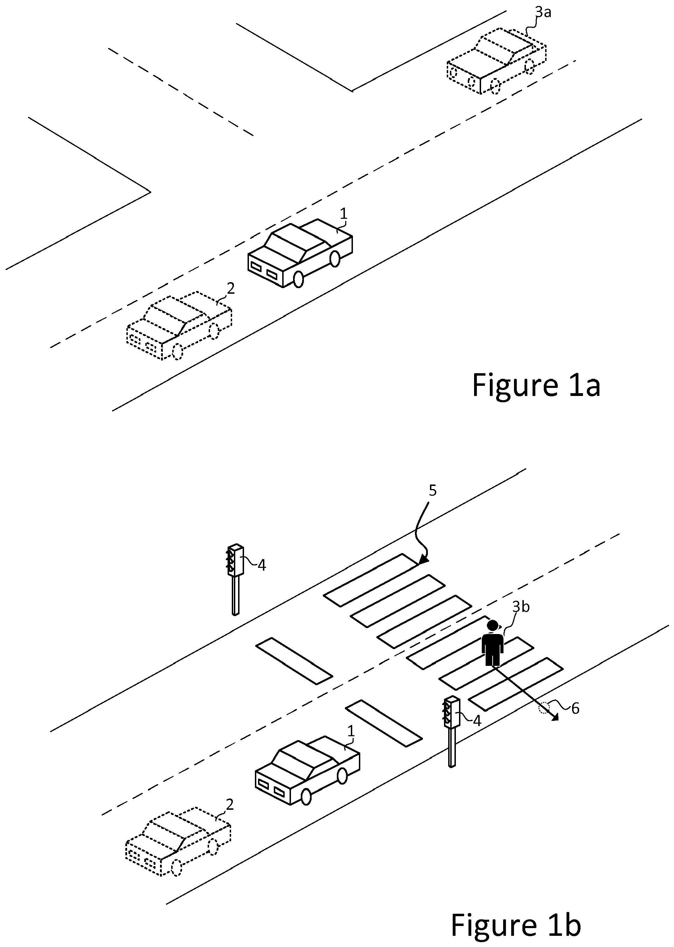

Figures 1a and 1b show schematic perspective view illustrations of two scenarios for a first vehicle 1, a second vehicle 2 and a further object in the form of a third vehicle 3a in Figure 1a and a pedestrian 3b in Figure 1b. Specifically, the Figures 1a and 1b illustrate two scenarios where collisions may occur.

In Figure 1a, the first vehicle 1 is reducing its speed and is about to turn left over the oncoming roadway. The second vehicle 2 is approaching the first vehicle 1 from behind and third vehicle 3a is travelling in opposite direction in the oncoming roadway. In this situation, a primary collision of the second vehicle 2 into the first vehicle 1 may occur if the second vehicle 2 is not stopped before it reaches the first vehicle 1. If the front wheels of the first vehicle are already turned to the left in preparation for the left turn, and the front wheels are still allowed to turn, i.e. they are not locked due to applied braking force, the primary collision may result in the first vehicle 1 being knocked into the oncoming roadway and cause a secondary collision between the first vehicle 1 and the third vehicle 3a. This is due to the impact from behind due to the primary collision of the second vehicle 2 into the first vehicle 1 will cause a force on the first vehicle 1 and since the front wheels are allowed to turn and are directed to the left, there may be enough friction force for the first vehicle 1 being steered into the oncoming roadway.

In Figure 1b, the first vehicle 1 is reducing its speed and is about to stop before the traffic lights 4 at a crosswalk 5. The second vehicle 2 is approaching the first vehicle 1 from behind and the pedestrian 3b is crossing the road at the crosswalk 5 in the direction indicated by an arrow 6. No further vehicle is travelling in the lane to the left of the first vehicle 1 and the second vehicle 2. Both lanes are for traffic in the same direction towards the crosswalk as seen from the first vehicle 1 and the second vehicle 2. In this scenario, a primary collision of the second vehicle 2 into the first vehicle 1 may occur if the second vehicle 2 is not stopped before it reaches the first vehicle 1. If the impact of the primary collision is powerful enough, it may result in the first vehicle 1 being knocked forward to cause a secondary collision between the first vehicle 1 and the pedestrian 3b.

Even if both Figures 1a and 1b illustrate scenarios where the first vehicle 1 in a potential primary collision is being hit from behind, other scenarios are contemplated where the first vehicle is being hit from the side or from the front resulting in a secondary collision.

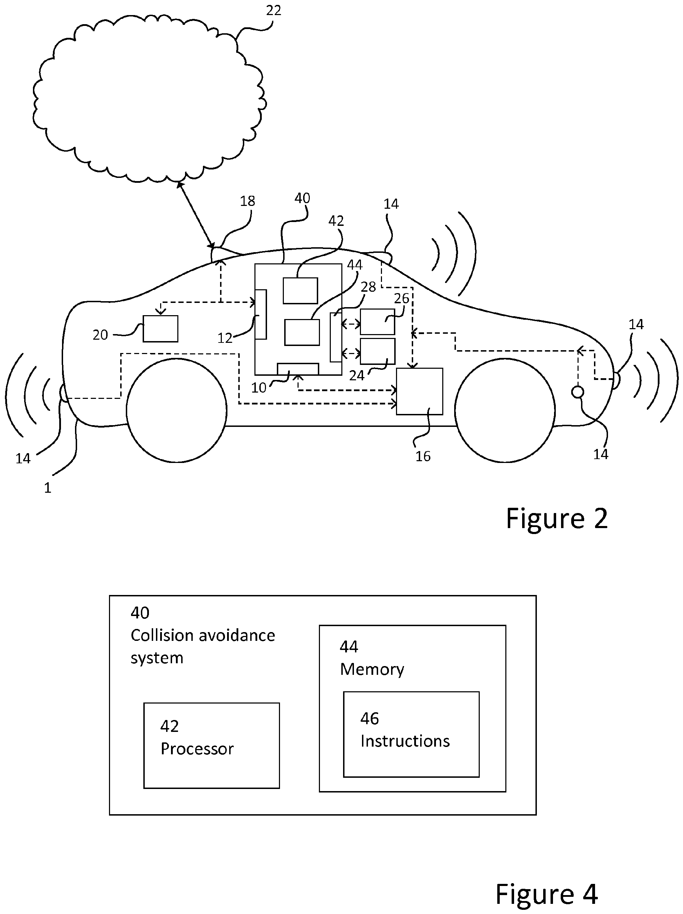

Figure 2 is a schematic side view illustration of a vehicle 1, such as the first vehicle 1 in relation to Figures 1a and 1b comprising a collision avoidance system 40. The collision avoidance system 40 has a processor 42, a memory 44, a sensor interface 10 and a communication/antenna interface 12.

The vehicle 1 has a sensor system comprising a plurality of sensors 14 (e.g. cameras, LIDARs, RADARs, ultrasound transducers, etc.). The sensors 14 are configured to acquire information representative of a surrounding environment of the vehicle. In more detail, the sensors 14 suitable for tracking one or more road references (e.g. lane markings, road edges, other vehicles, landmarks, etc.) and moving objects, such as other vehicles, pedestrians etc. Based on the tracking, estimated trajectories of the moving objects can be predicted. Other types of sensors can also be used, e.g. sensors detecting driver behaviour or other that may be relevant in relation to determining a risk of a collision.

Further, the processor 42 of the collision avoidance system 40 is configured to receive sensor data comprising information about the surrounding environment of the first vehicle 1. It should be appreciated that the sensor interface 10 may also provide the possibility to acquire sensor data directly (not shown) or via dedicated sensor control circuitry 16 in the vehicle. The communication/antenna interface 12 may further provide the possibility to send output to a remote location by means of an antenna 18. Moreover, some sensors 14 in the vehicle may communicate with the collision avoidance system 40 using a local network setup, such as CAN bus, I2C, Ethernet, optical fibres, and so on. The communication/antenna interface 12 may be arranged to communicate with other control functions of the vehicle and may thus be seen as control interface also. However, a separate control interface (not shown) may be provided. Local communication within the vehicle may also be of a wireless type with protocols such as WiFi, LoRa, Zigbee, Bluetooth, or similar mid/short range technologies.

The first vehicle may also comprise a localization system 20 configured to determine a set of geographical coordinates (i.e. a map position) of the first vehicle 1 and an orientation of the vehicle 1.

Further, the vehicle 1 may be connected to an external network 22. The connection from the first vehicle to the external network 22 may for example be via for instance a wireless link (e.g. for performing a part or all of the computations by means of remote resources) via the antenna 18. The same or some other wireless link may be used to communicate with other vehicles in the vicinity of the vehicle or with local infrastructure elements. Cellular communication technologies may be used for long range communication such as to external networks and if the cellular communication technology used have low latency it may also be used for communication between vehicles, vehicle to vehicle (V2V), and/or vehicle to infrastructure, V2X. Examples of cellular radio technologies are GSM, GPRS, EDGE, LTE, 5G, 5G NR, and so on, also including future cellular solutions. However, in some solutions mid to short range communication technologies are used such as Wireless Local Area (LAN), e.g. IEEE 802.11 based solutions. ETSI is working on cellular standards for vehicle communication and for instance 5G is considered as a suitable solution due to the low latency and efficient handling of high bandwidths and communication channels.

The collision avoidance system 40 may also be connected to a control system 24 of the vehicle 1 and/or a user interface 26 via an interface 28. Via the interface 28, the collision avoidance system 40 may send signals to the control system 24 in order to control the vehicle 1 to perform one or more driving manoeuvers such as an acceleration manoeuvre, a steering manoeuvre, and a braking manoeuvre. Additionally or alternatively, the collision avoidance system 40 may send signals via the interface 24 to the user interface 28 to provide instructions to a driver of the first vehicle to perform one or more driving manoeuver such as an acceleration manoeuver, a steering manoeuver, and a braking manoeuver.

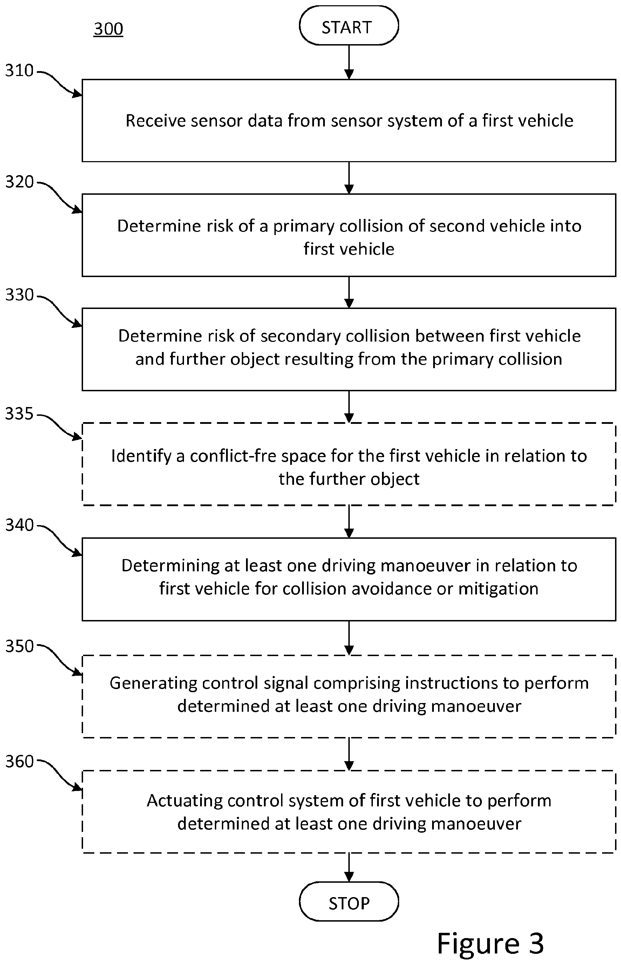

Figure 3 is a flow-chart representation of a method 300 for determining at least one driving manoeuver in relation to a potential collision in accordance with an embodiment of the present disclosure. In the method 300 sensor data are received 310 from a sensor system of a first vehicle. The sensor data include data regarding one or more road references (e.g. lane markings, road edges, other vehicles, landmarks, etc.) and moving objects, such as other vehicles, pedestrians etc. Based on the sensor data, estimated trajectories of the moving objects and of the first vehicle can be predicted and updated in real time. Based on the received sensor data, a risk of a primary collision of a second vehicle into the first vehicle is determined 320. Furthermore, based on the received sensor data and the determined risk of the primary collision, a risk of a secondary collision between the first vehicle and a further object is determined 330. The secondary collision is a collision resulting from the primary collision. For example, one secondary collision resulting from the primary collision is if the second vehicle collides with the first vehicle from behind when the first vehicle is driving slowly or standing still. The first vehicle may then be pushed due to the primary collision and thus colliding with a further object situated in or moving into in the trajectory of the first vehicle after the primary collision. Examples of such scenarios are shown in Figures 1a and 1b. Hence, if the primary collision does not occur, the secondary collision does not occur. The further object may for example be one of a pedestrian, a cyclist, a motorcyclist, a third vehicle, an animal, and a fixed object. A similar collision may occur as the secondary collision even if the primary collision occurs, however, then the similar collision will not be a secondary collision as defined herein. Based on the risk of the primary collision and the risk of the secondary collision, at least one driving manoeuver in relation to the first vehicle for collision avoidance or mitigation is determined 340. The at least one driving manoeuver may for example be one or more of an acceleration manoeuver, a steering manoeuver, and a braking manoeuver.

An advantage with the method 300 is that a risk of a secondary collision resulting from the primary collision is determined and also the risk of the secondary collision is taken into account when determining one or more driving manoeuvers to avoid or mitigate the effects of the primary collision and secondary collision. Taking both the primary collision and a resulting secondary collision into account will enable determining better driving manoeuvers to avoid or mitigate the overall effects of collisions.

One way of avoiding or mitigating the effects of the primary collision and the secondary collision is to identify a conflict-free space for the first vehicle in relation to the further object and determine at least one driving manoeuver based on the conflict-free space, e.g. at least one driving manoeuver aiming at moving the vehicle to the conflict-free space.

A conflict-free space is typically a space where two objects are predicted not to be at the same time. Hence, a conflict-free space for the first vehicle in relation to the further object may be a space where the further object is not predicted to be in at a time when the first vehicle can enter the space.

The identification of the conflict-free space for the first vehicle in relation to the further object is preferably based on the received sensor data, the risk of the primary collision, and the risk of the secondary collision. Based on the received sensor data, trajectories of the first vehicle, second vehicle and the further object can be predicted before the primary collision to in turn determine predicted details regarding the primary collision. Furthermore, based further on the predicted details regarding the primary collision, trajectories of the first vehicle, second vehicle and the further object can also be predicted after the primary collision.

If the at least one at least one driving manoeuver aims at moving the first vehicle to the conflict-free space, the effects of the secondary collision can be avoided or mitigated. The first vehicle can be moved to the conflict-free space by means of the at least one driving manoeuver before the primary collision occurs or as a result of the primary collision together with the at least one driving manoeuver.

It is to be noted that the conflict-free space for the first vehicle in relation to the further object is not necessarily conflict-free space for the first vehicle in relation to the second vehicle. Hence, the primary collision may not be possible to avoid by means of the at least one driving manoeuver, but by performing the at least one driving manoeuver and moving the first vehicle to the conflict-free space in relation to the further object before the primary collision occurs, the primary collision may not result in the secondary collision.

In a first example, in the scenario illustrated in Figure 1a, in front of the first vehicle 1 may be identified as a conflict-free space of the first vehicle 1 in relation to the further object in the form of the third vehicle 31. If the primary collision of the second vehicle 2 into the first vehicle 1 from behind is not possible to avoid, driving manoeuvers of the first vehicle before the primary collision occurs, such as a steering manoeuver turning the front wheels such that they are directed to straight forward and possibly an acceleration manoeuver, the primary collision may be mitigated by the reduced speed difference between the second vehicle 2 and the first vehicle. The primary collision may further result in the first vehicle 1 being knocked straight forward instead of to the left and hence the secondary collision between the first vehicle land the third vehicle 3a is avoided. Hence, even if the primary collision may not be avoided, the overall effects of the primary collision is reduced by means of the determined at least one driving manoeuver since the secondary collision is taken into account and in this situation is possible to avoid.

In a second example, in the scenario illustrated in Figure 1b, to the left of the pedestrian 3b as seen from the first vehicle 1 may be identified as a conflict-free space of the first vehicle 1 in relation to the further object in the form of the pedestrian 3b. If the primary collision of the second vehicle 2 into the first vehicle 1 from behind is not possible to avoid, driving manoeuvers of the first vehicle before the primary collision occurs, such as a steering manoeuver turning the front wheels such that they are directed (pointing) to the left and allowing the front wheels to rotate, e.g. by releasing any braking force applied, the primary collision may result in the first vehicle 1 being knocked to the left of the pedestrian 3b as seen from the first vehicle 1. This is due to the impact from behind due to the primary collision of the second vehicle 2 into the first vehicle 1 will cause a force on the first vehicle 1 and since the front wheels are allowed to rotate and have been turned by the steering manoeuver such that they are directed (pointing) to the left, there may be enough friction force for the first vehicle 1 being steered and moved to the left of the pedestrian 3b as seen from the first vehicle 1 after the primary collision. Hence, even if the primary collision is not avoided, the overall effects of the primary collision is reduced by means of the determined at least one driving manoeuver since the secondary collision is taken into account and in this situation is possible to avoid.

The method 300 may further comprise estimating, based on the received sensor data, one or more of:
- a weight of the first vehicle
- a size of the first vehicle
- a position of the first vehicle at the primary collision
- a velocity of the first vehicle at the primary collision
- an acceleration of the first vehicle at the primary collision
- a direction of the first vehicle at the primary collision
- a front wheel direction for the first vehicle at the primary collision
- a rate of change of a front wheel angle for the first vehicle at the primary collision
- a velocity of the first vehicle after the primary collision
- a direction of the first vehicle after the primary collision
- a weight of the second vehicle
- a size of the second vehicle
- a velocity of the second vehicle at the primary collision
- an acceleration of the second vehicle at the primary collision
- a direction of the second vehicle at the primary collision
- a point of collision of the second vehicle on the first vehicle at the primary collision
- a weight of the further object
- a size of the further object
- a position of the further object at the primary collision
- a velocity of the further object after the primary collision
- an acceleration of the further object at the primary collision
- a velocity of the further object after the primary collision
- a direction of the further object after the primary collision

These estimations can for example be used to estimate predicted trajectories of the first vehicle, the second vehicle and the further object before and after the primary collision. For example, based on a weight of the first vehicle, a position of the first vehicle at the primary collision, a velocity of the first vehicle at the primary collision, a direction of the first vehicle at the primary collision, a front wheel direction for the first vehicle at the primary collision, a weight of the second vehicle (or a size of the second vehicle and an estimated weight based on size), a velocity of the second vehicle at the primary collision, a direction of the second vehicle at the primary collision, and a point of collision of the second vehicle on the first vehicle at the primary collision, the trajectory of the first vehicle after the primary collision can be determined. Furthermore, based on the trajectory of the first vehicle after the primary collision, a position of the further object at the primary collision, a velocity of the further object after the primary collision, and a direction of the further object after the primary collision, the risk of a secondary collision between the first vehicle and the further object can be determined.

Further estimates and conclusions can be made based on the received sensor data. For example, sensor data indicating attention of the driver of the first vehicle are useful in the risk assessment.

The above estimates are not necessarily made at the same time and are generally updated in real time in order to have up-to-date estimates. Similarly, the determined risk of the primary collision, the determined risk of the secondary collision, and the determined at least one driving manoeuver are generally updated in real time so that at any point in time there is current risks and a current determined at least one driving manoeuver. A control signal is generated in real time, comprising instructions to perform the determined at least one driving manoeuver and sent to a control system of the first vehicle. When the risk of the primary collision and/or the risk of the secondary collision reaches a threshold value, e.g. based on the estimated effects of the collisions, the control system of the first vehicle may be actuated to perform determined at least one driving manoeuver. In alternative, when the risk of the primary collision and/or the risk of the secondary collision reaches the threshold value, a user interface of the first vehicle is actuated for providing instructions to a driver of the first vehicle to perform the determine at least one driving manoeuver.

Figure 4 is a schematic diagram of a collision avoidance system 40 for determining for determining driving assisting data in accordance with an embodiment of the present disclosure.

The central control system at least one processor 42 and at least one memory 44. The processor is configured to execute instructions 46 stored in the memory causing the central control system 40 to perform method for determining driving assisting data in relation to a vehicle based on sensor data in relation to other vehicles according to the disclosure and in particular according to the embodiments disclosed in relation to Figure 3.

The collision avoidance system 40 may for example be manifested as a general-purpose processor, an application specific processor, a circuit containing processing components, a group of distributed processing components, a group of distributed computers configured for processing, a field programmable gate array (FPGA), etc. The collision avoidance system 40 may further include a microprocessor, microcontroller, programmable digital signal processor or another programmable device. The central control system 40 may also, or instead, include an application-specific integrated circuit (ASIC), a programmable gate array or programmable array logic, a programmable logic device, or a digital signal processor. Where the collision avoidance system 40 includes a programmable device such as the microprocessor, microcontroller or programmable digital signal processor mentioned above, the processor may further include computer executable code that controls operation of the programmable device.

The processor(s) 42 (associated with the collision avoidance system 40) may be or include any number of hardware components for conducting data or signal processing or for executing computer code (instructions 46) stored in memory 44. The memory 44 may be one or more devices for storing data and/or computer code for completing or facilitating the various methods described in the present description. The memory 44 may include volatile memory or non-volatile memory. The memory 44 may include database components, object code components, script components, or any other type of information structure for supporting the various activities of the present description. According to an exemplary embodiment, any distributed or local memory device may be utilized with the systems and methods of this description. According to an exemplary embodiment the memory 44 is communicably connected to the processor 42 (e.g., via a circuit or any other wired, wireless, or network connection) and includes computer code for executing one or more processes described herein.

Comprised in the collision avoidance system 40 may be a non-transitory computer-readable storage medium 44 storing one or more programs configured to be executed by one or more processors 42 of the collision avoidance system 40, the one or more programs comprising instructions 56 for causing the collision avoidance system 40 to perform the method according to the disclosure and in particular according to the embodiments disclosed in relation to Figure 3.

Generally speaking, a computer-accessible medium may include any tangible or non-transitory storage media or memory media such as electronic, magnetic, or optical media - e.g., disk or CD/DVD-ROM coupled to computer system via bus. The term "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

The present disclosure has been presented above with reference to specific embodiments. However, other embodiments than the above described are possible and within the scope of the disclosure. Different method steps than those described above, performing the method by hardware or software, may be provided within the scope of the disclosure. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Accordingly, it should be understood that parts of the described solution may be implemented either in the vehicle, in a system located external the vehicle, or in a combination of internal and external the vehicle; for instance in a server in communication with the vehicle, a so called cloud solution. For instance, sensor data may be sent to an external system and that system performs the steps to compare the sensor data (movement of the other vehicle) with the predefined behaviour model. The different features and steps of the embodiments may be combined in other combinations than those described.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. For example, the steps of receiving signals comprising information about a movement and information about a current road scenario may be interchanged based on a specific realization. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps. The above mentioned and described embodiments are only given as examples and should not be limiting to the present invention. Other solutions, uses, objectives, and functions within the scope of the invention as claimed in the below described patent embodiments should be apparent for the person skilled in the art.

## Claims

1. A method for a collision avoidance system for determining at least one driving manoeuver in relation to a potential collision, the method comprising:
receiving sensor data from a sensor system of a first vehicle;
determining, based on the received sensor data, a risk of a primary collision of a second vehicle into the first vehicle;
determining, based on the received sensor data and the determined risk of the primary collision, a risk of a secondary collision between the first vehicle and a further object, the secondary collision resulting from the primary collision; and
determining, based on the risk of the primary collision and the risk of the secondary collision, at least one driving manoeuver in relation to the first vehicle for collision avoidance or mitigation.

2. The method of claim 1, further comprising:
identifying, based on the received sensor data, a conflict-free space for the first vehicle in relation to the further object,
wherein the determined at least one driving manoeuver is further based on the identified conflict-free space.

3. The method of claim 3 wherein the determined at least one driving manoeuver is aimed at the first vehicle moving to the conflict free space.

4. The method of claim 4, wherein the determined at least one driving manoeuver is aimed at the first vehicle moving to the conflict-free space before the primary collision occurs.

5. The method of claim 4, wherein the determined at least one driving manoeuver is aimed at the first vehicle moving to the conflict-free space as a result of the primary collision occurring.

6. The method of any one of claims 1-5, further comprising estimating, based on the received sensor data, one or more of:
a weight of the first vehicle;
a size of the first vehicle;
a position of the first vehicle at the primary collision;
a velocity of the first vehicle at the primary collision;
an acceleration of the first vehicle at the primary collision;
a direction of the first vehicle at the primary collision;
a front wheel direction for the first vehicle at the primary collision;
a rate of change of a front wheel angle for the first vehicle at the primary collision;
a velocity of the first vehicle after the primary collision;
a direction of the first vehicle after the primary collision;
a weight of the second vehicle;
a size of the second vehicle;
a velocity of the second vehicle at the primary collision;
an acceleration of the second vehicle at the primary collision;
a direction of the second vehicle at the primary collision;
a point of collision of the second vehicle on the first vehicle at the primary collision;
a weight of the further object;
a size of the further object;
a position of the further object at the primary collision;
a velocity of the further object after the primary collision;
an acceleration of the further object at the primary collision;
a velocity of the further object after the primary collision; and
a direction of the further object after the primary collision.

7. The method of any one of claims 1-6, wherein the further object is one of:
a pedestrian;
a cyclist;
a motorcyclist;
a third vehicle;
an animal; and
a fixed object.

8. The method of any one of claims 1-7, wherein the determined at least one driving manoeuver is to be performed before the primary collision occurs.

9. The method of any one of claims 1-8, wherein the primary collision is of the second vehicle into the first vehicle from behind.

10. The method of any one of claims 1-9, further comprising generating a control signal comprising instructions to perform the determined at least one driving manoeuver.

11. The method of any one of claims 1-10, further comprising actuating a control system of the first vehicle to perform the determined at least one driving manoeuver.

12. The method of any one of claims 1-10, further comprising actuating a user interface of the first vehicle for providing instructions to a driver of the first vehicle to perform the determined at least one driving manoeuver.

13. The method of any one of claims 1-12, wherein the at least one driving manoeuver comprises one or more of:
an acceleration manoeuver;
a steering manoeuver; and
a braking manoeuver.

14. A non-transitory computer-readable storage medium storing one or more programs configured to be executed by one or more processors of a collision avoidance system, the one or more programs comprising instructions for causing the collision avoidance system to perform the method according to any one of claims 1-13.

15. A collision avoidance system comprising:
at least one processor;
at least one memory;
wherein the at least one processor is configured to execute instructions stored in the memory causing the collision avoidance system to perform a method comprising:
receiving sensor data from a sensor system of a first vehicle,
determining, based on the received sensor data, a risk of a primary collision of a second vehicle into the first vehicle;
determining, based on the received sensor data and the determined risk of the primary collision, a risk of a secondary collision between the first vehicle and a further object, the secondary collision resulting from the primary collision; and
determining, based on the risk of the primary collision and the risk of the secondary collision, at least one driving manoeuver in relation to the first vehicle for collision avoidance or mitigation.
